# EUROPEAN PATENT SPECIFICATION

(11) **EP 2 912 831 B1**
(45) Date of publication and mention of the grant of the patent: **11.04.2018**
(21) Application number: 12887622.4
(22) Date of filing: 29.10.2012
(51) Int. Cl.: G06F 13/40, H04M 1/253, G06F 13/42

(54) **ETHERNET OVER USB INTERFACES WITH FULL-DUPLEX DIFFERENTIAL PAIRS**
ETHERNET-ÜBER-USB-SCHNITTSTELLEN MIT VOLLDUPLEX-DIFFERENZIALPAAREN
INTERFACES ETHERNET SUR USB AVEC PAIRES DIFFÉRENTIELLES À DUPLEX INTÉGRAL

(43) Date of publication of application: 02.09.2015
(73) Proprietor: Qualcomm Incorporated, San Diego, CA 92121-1714 (US)
(72) Inventor: YU, Hongchun, San Diego, California 92121-1714 (US)
(74) Representative: Wegner, Hans
(86) International application number: PCT/CN2012/083687
(87) International publication number: WO 2014/067050

(56) References cited:
- CN-A- 1 863 351
- CN-A- 1 936 863
- CN-A- 101 909 101
- CN-A- 101 916 429

## Description

### TECHNICAL FIELD

The present embodiments relate generally to computer networking, and specifically to providing Ethernet communications over USB interfaces.

### BACKGROUND OF RELATED ART

Various interface standards for connecting computers, external peripherals, and networks are employed to provide simple connectivity at high speeds. For example, the Universal Serial Bus (USB) is a high-speed serial bus protocol commonly used to connect computers such as PCs and laptops to a wide variety of peripheral devices such as mice, keyboards, printers, flash drives, and the like, and the Ethernet protocol is a networking standard for connecting computers in both Local Area Networks (LANs) and Wide Area Networks (WANs).

More specifically, the USB protocol was developed to offer PC users an enhanced and easy-to-use interface for connecting an incredibly diverse range of peripherals to their computers. The development of the USB was initially driven by considerations for laptop computers, which greatly benefit from a small profile peripheral connector. In addition, USB devices are hot pluggable, which means they may be connected to or disconnected from a PC without requiring the PC to be powered off.

The Ethernet protocol, which is embodied in the IEEE 802.3 series standard, allows for Ethernet communications over several different mediums including, for example, co-axial cable, twisted-pair cables (e.g., CAT-5 and CTA-6 cables), and optic fiber lines. The Ethernet defines a number of wiring and signaling standards for the physical layer (PHY) via network access at the Media Access Control (MAC) layer, and through a common addressing format. The MAC layer is a sub-layer of the data link layer specified in the seven-layer Open System Interconnect (OSI) model, and acts as an interface between the Logical Link Control (LLC) sub-layer and the network's physical (PHY) layer.

For many host devices such as PCs, Ethernet technology is embedded within the device's motherboard so that the host device may be easily connected to an Ethernet network via an Ethernet cable attached to an Ethernet port provided in the device. For example, many modern Ethernet ports include an RJ45 connector that mates with Ethernettwisted-pair cables (e.g., CAT-5 and CAT-6 cables). However, because of the relatively large form factor of Ethernet ports with respect to smaller computing devices such as ultrathin notebook computers, smartphones, and tablet computers, many of these smaller computing devices do not include Ethernet ports that mate with Ethernetcables.

For host devices that do not include an Ethernet port, Ethernet functionality may be provided using the device's USB port (which is much smaller than RJ45 ports). For such devices, a user may attach a USB-to-Ethernet adaptor to one of the device's available USB ports to provide Ethernet functionality to the device. In operation, these USB-to-Ethernet adaptors provide an interface between the host device's USB port and the adaptor's Ethernet port, to which an Ethernet network may be connected using Ethernetcables such as CAT-5 cables.

Although effective in allowing a host device to connect to an Ethernet network using its USB port(e.g., rather than an Ethernet port), conventional USB-to-Ethernet adaptors may be expensive, may consume a significant amount of power, and may include a complex array of circuit components. For example, conventional USB-to-Ethernet adaptors typically include a USB controller to communicate with the host device's USB port, an Ethernet PHY to communicate with the Ethernetcable via the adaptor's Ethernetport, and an Ethernet MAC to facilitate communications between the adaptor's USB controller and Ethernet PHY. For such systems, the host device typically includes an Ethernet MAC coupled to its USB port via a USB controller.

Document CN 1863351 A relates to a cell phone device of the wire communication including a controller, a wireless signals T-R module, a storage, a display and an I/O interface, in which, said device has a wire network interface to be communicated with the wire communication module and terminal users can be connected with internet to browse webs, download files and chat and share all resources of the internet by the Ethernet interface and users can download music, video and electronic books in the wire mode.

Thus, there is a need for a smaller form factor USB-to-Ethernet adaptor and associated host device architecture that consumes less power, employs less circuitry, and allows for greater throughput.

### SUMMARY

The invention is defined in the independant claims. A system and method are disclosed that allow a host device to communicate with an external device using either Ethernet communications or USB communications provided via a USB port and a USB connection (e.g., a USB cable). For some embodiments, the host device includes a processor for generating data to be transmitted to the external device, an Ethernet media access control (MAC) circuit coupled to the processor, a USB controller coupled to the processor, a USB port to couple to the external device via the USB connection, and a transceiver including first terminals coupled to the USB port and second terminals coupled to either the Ethernet MAC circuit or to the USB controller in response to a mode select signal. The host device may also include a detection circuit that generates the mode select signal in response to determining whether the external device is a USB device or an Ethernet device.

For at least some embodiments, the transceiver forms a portion of a USB 3.0 compliant interface, and includes at least two differential transistor pairs to provide full-duplex signaling between the host device and the external device via the USB connection. For at least one embodiment, the transceiver includes a third differential pair to provide backward compatibility with legacy devices that communicate according to the USB 2.0 protocol.

For some embodiments, if the external device is determined to be a USB device, then the mode select signal is driven to a first state that may cause the host device to enter a USB mode of operation. In the USB mode of operation, the select circuit is to couple the transceiver to the USB controller and to decouple the transceiver from the Ethernet MAC circuit. Thereafter, the transceiver is to operate as a USB compliant transceiver to exchange USB signals between the USB controller of the host device and the external device via the USB port.

Conversely, if the external device is determined to be an Ethernet device, then the mode select signal is driven to a second state that may cause the host device to enter an Ethernet mode of operation. In the Ethernet mode of operation, the select circuit is to couple the transceiver to the Ethernet MAC circuit and to decouple the transceiver from the USB controller. Thereafter, the transceiver is to operate as a MAC-side media independent interface to exchange Ethernet signals between the Ethernet MAC circuit of the host device and the external device via the USB port. In this manner, a PHY-side media independent interface provided on the external Ethernet device may operate with the transceiver provided on the host device to provide a serial gigabit media independent interface that facilitates the exchange of signals between the Ethernet MAC circuit provided on the host device and an Ethernet PHY circuit provided on the external Ethernet device. As a result, the external Ethernet device may not include any USB controllers or Ethernet MAC circuits, thereby reducing the area and power consumption of the external Ethernet device.

Further, the host device may not include any Ethernet PHY circuitry, and the host device may perform 8B/10B encoding functions for Ethernet communications (e.g., as opposed to performing 8B/10B encoding functions on the external Ethernet device). In addition, using portions of the host device's USB 3.0 compliant interface as a media independent interface for Ethernet communications may also increase throughput because Ethernet signals are transmitted directly from the host device to the external device via the USB connection (e.g., as opposed to converting Ethernet data to USB signals for transmission to the external device and then converting the signals into Ethernet data in the external device).

For at least one other embodiment, the transceiver forms a portion of another type of interface (e.g., a PCI type interface), and includes at least two differential transistor pairs to provide full-duplex signaling between the host device and the external device via the USB connection.

### BRIEF DESCRIPTION OF THE DRAWINGS

The present embodiments are illustrated by way of example and are not intended to be limited by the figures of the accompanying drawings, where:
FIG. 1 is a block diagram of an Ethernet network device;
FIG. 2 is a block diagram of a computer system in accordance with some embodiments;
FIG. 3A is a block diagram of an illustrative USB device that is one embodiment of the external device of FIG. 2;
FIG. 3B is a block diagram of an illustrative USB-to-Ethernet adaptor that is another embodiment of the external device of FIG. 2;
FIG. 4 is an illustrative flow chart depicting an exemplary operation of the system of FIG. 2 in accordance with some embodiments;
FIG. 5A is a simplified functional block diagram of the computer system of FIG. 2 when configured to operate in a USB mode; and
FIG. 5B is a simplified functional block diagram of the computer system of FIG. 2 when configured to operate in an Ethernet mode.

Like reference numerals refer to corresponding parts throughout the drawing figures.

### DETAILED DESCRIPTION

In the following description, numerous specific details are set forth to provide a thorough understanding of the present disclosure. Also, in the following description and for purposes of explanation, specific nomenclature is set forth to provide a thorough understanding of the present embodiments. However, it will be apparent to one skilled in the art that these specific details may not be required to practice the present embodiments. In other instances, well-known circuits and devices are shown in block diagram form to avoid obscuring the present disclosure. The term "coupled" as used herein means connected directly to or connected through one or more intervening components or circuits. Further, the terms "protocol" and "standards" refer to communications governed by an applicable protocol or standard, and are thus interchangeable for purposes of this disclosure. Any of the signals provided over various buses described herein may be time-multiplexed with other signals and provided over one or more common buses. Additionally, the interconnection between circuit elements or software blocks may be shown as buses or as single signal lines. Each of the buses may alternatively be a single signal line, and each of the single signal lines may alternatively be buses, and a single line or bus might represent any one or more of a myriad of physical or logical mechanisms for communication between components.

For the disclosure herein, reference may be made to the Open System Interconnection (OSI) model, which includes 7 logical layers: layer 1 is the physical layer, layer 2 is the data link layer, layer 3 is the network layer, layer 4 is the transport layer, layer 5 is the session layer, layer 6 is the presentation layer, and layer 7 is the application layer. The higher in hierarchy an OSI layer is, the closer it is to an end user; the lower in hierarchy an OSI layer is, the closer it is to a physical channel. For example, on the top of the OSI model hierarchy is the application layer, which interacts directly with the end user's software application. On the contrary, on the bottom of the OSI model hierarchy is the physical layer, which defines the relationship between a network device and a physical communication medium.

More specifically, the physical layer provides electrical and physical specifications for the physical medium, and includes transceivers that may modulate/de-modulate data to be transmitted/received over the medium. The datalink layer provides the functional and/or procedural details, such as addressing and channel access control mechanisms, for data transmissions between devices. The datalink layer includes two sub-layers: the logical link control (LLC) layer and the media access control (MAC) layer.

In systems and devices that communicate using the Ethernet protocol, an interface exists between the MAC layer and the PHY layer to facilitate the exchange of information between the two layers. This interface is referred to as a media independent interface (Mil) because the MAC layer is agnostic as to the physical medium used for data transmission (and thus agnostic as to the particular PHY device employed). In this manner, the Mil allows a given MAC device to be used with a wide variety of PHY devices. The term Mil also refers to a specific type of media independent interfaces, in addition to referring to the entire genus. As used herein, the terms "media access interface" and "MII" will refer to the entire genus of such interfaces, unless otherwise noted. Examples of Mils include Attachment Unit Interface (AUI), Mil, Reduced Mil, Gigabit Mil (GMII), Reduced GMII, Serial GMII (SGMII), Quad SGMII (QSGMII), 10GMII, and Source Synchronous Serial Mil (S3MII).

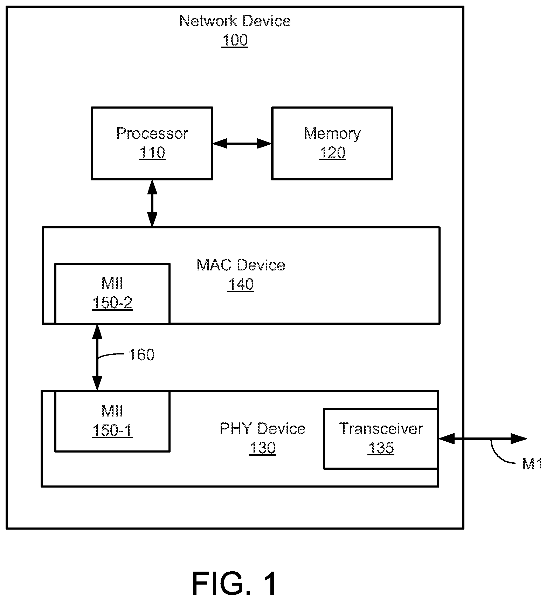

For example, FIG. 1 is a functional block diagram of a network device 100 capable of communicating with an external Ethernet network (not shown for simplicity) via a physical medium M1 (e.g., an Ethernet cable such as a twisted-pair cable). Network device 100 includes a processor 110, a memory 120, a PHY device 130, and a MAC device 140. PHY device 130 includes an Ethernet transceiver 135 that is coupled to physical medium M1. Although Ethernet transceiver 135is illustrated in FIG. 1 as being included in PHY device 130, transceiver 135may be a stand-alone device or integrated circuit. Memory 120 may be any suitable memory element or device including, for example, EEPROM or Flash memory. Processor 110 may be any suitable processor capable of executing scripts or instructions of one or more software programs stored, for example, in memory 120.

PHY device 130 and MAC device 140 each include a media independent interface 150-1 and 150-2, respectively, for transmitting signals between the two devices via a set of signal paths 160. In some embodiments, the signal paths 160 include a first differential pair (e.g., a low-voltage differential signaling pair) of signal lines for transmitting signals from PHY device 130 to MAC device 140 and a second differential pair (e.g., a low-voltage differential signaling pair) of signal lines for transmitting signals from MAC device 140 to PHY device 130. Each differential pair provides a one-bit data path between PHY device 130 and MAC device 140. The signal paths may thus include a first serial path from PHY device 130 to MAC device 140 and a second serial path from MAC device 140 to PHY device 130.

More specifically, Mil 150-1 may include first and second PHY-side differential transistor pairs (not shown for simplicity) for transmitting and receiving data to and from, respectively, MAC device 140, and Mil 150-2 may include first and second MAC-side differential transistor pairs (not shown for simplicity) for transmitting and receiving data to and from, respectively, PHY device 130. Thus, Mil 150-1 may be referred to herein as a PHY-side MII, and MII 150-2 may be referred to herein as a MAC-side MII. In some embodiments, the signal paths 160 do not include any signal lines for transmitting clock signals between PHY device 130 and MAC device 140. For example, the interfaces 150-1 and 150-2 may not be source-synchronous.

MAC device 140 may be any device or integrated circuit that implements the functions of an OSI MAC sub-layer, and may be a stand-alone device or may be integrated into network device 100. Similarly, PHY device 130 may be any device or integrated circuit that implements the functions of the OSI physical layer, and may be a stand-alone device or may be integrated into network device 100. In some embodiments, PHY device 130 and MAC device 140 may be each implemented in integrated circuits mounted on a circuit board, and the signals paths 160 may be implemented as traces on the circuit board.

During data transmission operations, when an end-user software application on network device 100 transmits data to a network via medium M1, processor 110 processes the data in accordance with the top layers of the OSI model and then transmits the data through MAC device 140 to PHY device 130. Then, PHY device 130 transmits the data via transceiver 135 onto physical channel M1.

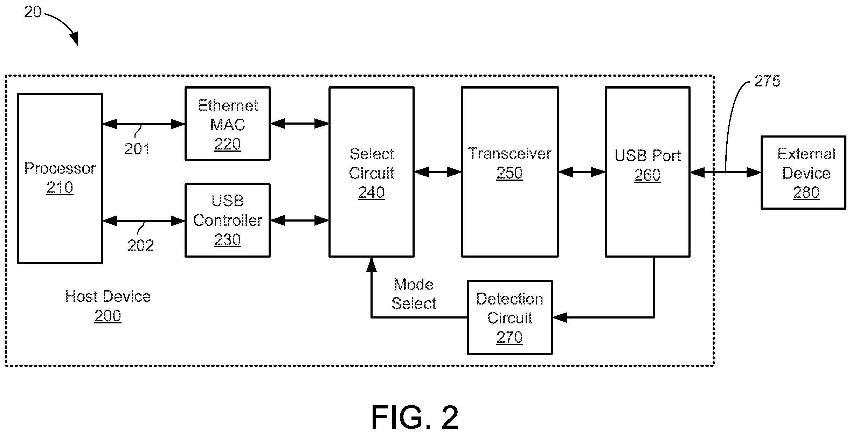

As mentioned above, asystem and method are disclosed herein that allows a host device to facilitate either Ethernet communications or USB communications with an external device over a USB connection. For example, FIG. 2 shows a system 20 including a host device 200 and an external device 280 in accordance with some embodiments. Host device 200 includes a processor 210, an Ethernet MAC circuit 220, a USB controller 230, a select circuit 240, a transceiver 250, a USB port 260, and a detection circuit 270.

Processor 210, which may be any suitable processor capable of executing scripts or instructions of one or more software programs stored in an associated memory (not shown for simplicity), may generate data to be transmitted to the external device 280 and/or may process data received from external device 280.

Ethernet MAC circuit 220, which is coupled to processor 210 via a bus 201,may be any device or integrated circuit that implements the functions of the OSI MAC sub-layer (e.g., as described above with respect to MAC device 140 of FIG. 1), and may be a stand-alone device or may be integrated into host device 200. For at least some embodiments, Ethernet MAC circuit 220 may include or be associated with a physical coding sub-layer (PCS) circuit (not shown for simplicity) that may provide 8B/10B encoding functions for Ethernet communications.

USB controller 230, which is coupled to processor 210 via a bus 202, may be any suitable USB controller capable of facilitating USB communications between processor 210 and USB port 260. For at least some embodiments, USB controller 230 may include or be associated with a PCS circuit (not shown for simplicity) to provide encoding functions for USB communications.

Buses 201 and 202 may be any suitable signal lines or may implement any suitable bus architecture including, for example, PCI, PCIE, AHB, and/or AXI. For one embodiment, buses 201 and 202 may be the same bus.

Transceiver 250includes first terminals to selectively couple to Ethernet MAC circuit 220 or USB controller 230, second terminals to couple to USB port 260, and at least two differential pairs (not shown for simplicity) that may allow for full-duplex signaling between host device 200 and external device 280 via a connection 275 (e.g., USB cable). For example, a first differential pair (e.g., a low-voltage differential signaling transistor pair) of transceiver 250 may be used for transmitting signals from host device 200 to external device 280 via USB cable 275, and a second differential pair (e.g., a low-voltage differential signaling transistor pair) of transceiver 250 may be used for receiving signals from external device 280 via USB cable 275. Thus, as described in more detail below, transceiver 250 of host device 200 may be shared by Ethernet MAC circuit 220 and USB controller 230. This is in contrast to conventional host device architectures that may include separate USB and Ethernet transceivers.

For some embodiments, transceiver 250 is compliant with the USB 3.0 standards, and includes a third differential pair (e.g., in addition to the first and second differential pairs described above) that may provide half-duplex signaling for legacy devices operating according to USB 2.0 standards.

For another embodiment, transceiver 250 may form a portion of a peripheral component interface (PCI) such PCI, PCI-X, PCI express, or PCI-SIG. For yet another embodiment, transceiver 250 may form a portion of an advanced microcontroller bus architecture-high performance bus (AHB). For still another embodiment, transceiver 250 may form a portion of an advanced extensible interface (AXI). For these embodiments, transceiver 250 includes at least two differential transistor pairs to provide full-duplex signaling between the host device and the external device via the connection 275. The connection 275 between host device 200 and external device 280 may operate according to one or more communication protocols other than USB.

Select circuit 240 includes first terminals coupled to Ethernet MAC circuit 220, second terminals coupled to USB controller 230, third terminals coupled to the first terminals of transceiver 250, and a control input to receive a mode select signal. Select circuit 240 may be any suitable switching or multiplexing circuit that selectively couples transceiver 250 to either Ethernet MAC circuit 220 or to USB controller 230 in response to the mode select signal. For at least some of the embodiments described herein, the mode select signal may be generated by detection circuit 270 which determines whether external device 280 is a USB device (e.g., that communicates with host device 200 using USB communication protocols) or is an Ethernet device (e.g., that communicates with host device 200 using Ethernet standards). For example, detection circuit 270 may drive the mode select signal to a first state to indicate that external device 280 is a USB device, and may drive the mode select signal to a second state to indicate that external device 280 is an Ethernet device. For at least another embodiment, the mode select signal may be generated by a user of host device 200.

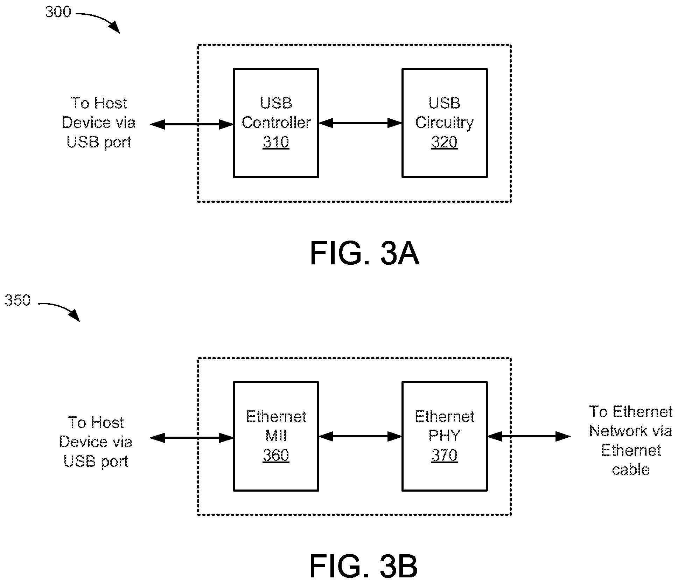

External device 280 may be any suitable device that either plugs directly into USB port 260 or couples to USB port 260 via a USB cable 275. As mentioned above, external device 280 may be a USB device (e.g., USB flash drive, mouse, etc.), or may be an Ethernet device (e.g., an Ethernet adaptor connected to an external Ethernet network). More specifically, FIG. 3A shows an external device 300 that is one embodiment of external device 280 of FIG. 2. External device 300, which is referred to herein as a "USB device"because it may communicate with host device 200 using USB-compliant signaling techniques (e.g., consistent with USB 2.0 and/or USB 3.0 protocols), is shown to include a USB controller 310 coupled to USB circuitry 320. USB controller 310, which may be any suitable USB controller, facilitates USB communications between USB circuitry 320 and host device 200 via host device 200's USB port 260, transceiver 250, and USB controller 230. USB circuitry 320 may include any suitable circuitry that delivers, processes, and/or stores data. For one example, for embodiments in which external device 300 is a USB flash drive, USB circuitry 320 may include flash memory and associated memory controllers. For another example, for embodiments in which external device 300 is a mouse, USB circuitry 320 may include the mouse architecture and associated controllers.

FIG. 3B shows an external device 350 that is another embodiment of external device 280 of FIG. 2. External device 350, which is referred to herein as an "Ethernet device" because it may communicate with host device 200 using communications governed by the Ethernet standards, is a USB-to-Ethernet adaptor configured in accordance with some embodiments. External device 350 is shown to include an Ethernet Mil 360 and an Ethernet PHY 370. Ethernet PHY 370, which may be any device or integrated circuit that implements the functions of the OSI physical layer (e.g., as described above with respect to PHY device 130 of FIG. 1), is associated with an Ethernet port (e.g., an RJ45 connector) that may be coupled to an external Ethernet network by a suitable Ethernet cable (e.g., a twisted-pair CAT-5 or CAT-6 cable).

Ethernet Mil 360 facilitates Ethernet communications between Ethernet PHY 370 and host device 200 via host device 200's USB port 260, transceiver 250, and Ethernet MAC circuit 220. As explained in more detail below, when external device 350 is coupled to host device 200 via host device 200's USB port 260, Ethernet Mil 360 of external device 350 and transceiver 250 of host device 200 form an Mil (e.g., such as a SGMII) that facilitates the exchange of data between Ethernet MAC circuit 220 of host device 200 and Ethernet PHY 370 of external device 350. In this manner, transceiver 250 operates as the MAC-side Mil and Ethernet Mil 360 operates as the PHY-side Mil, thereby allowing external device 350 and host device 200 to exchange data in a manner similar to the exchange of data between PHY device 130 and MAC device 140 of FIG. 1. As a result, embodiments of external device 350 that are configured as a USB-to-Ethernet adaptor (e.g., as depicted in FIG. 3B) may transmit and receive signals to and from host device 200 without a USB controller or an Ethernet MAC circuit provided on external device 350, and host device 200 may transmit and receive signals to and from external device 350 without separate Ethernet transceivers.

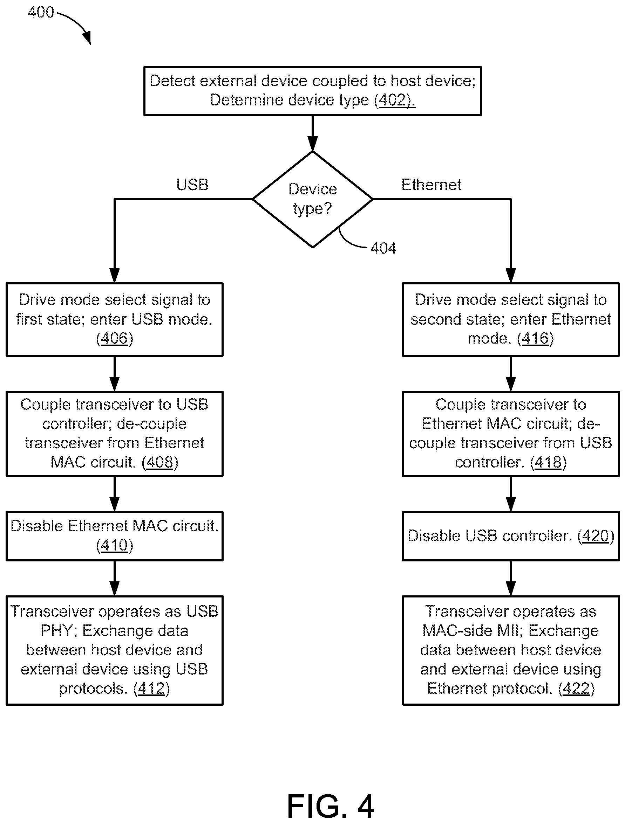

An exemplary operation of host device 200 communicating with external device 280 is described below with respect to the illustrative flow chart 400 of FIG. 4. After a user couples external device 280 to host device 200 (e.g., by plugging a USB interface of external device 280 into host device 200's USB port 260), detection circuit 270 determines whether external device 280 is a USB device or an Ethernet device (402). If external device 280 is a USB device, as tested in block404, then detection circuit 270 drives the mode select signal to a first state indicating a USB mode of operation (406). In response to the first state of the mode select signal, host device 200 enters a USB mode of operation and select circuit 240 couples transceiver 250 to USB controller 230 and de-couples transceiver 250 from Ethernet MAC circuit 220 (408). For some embodiments, Ethernet MAC circuit 220 may be disabled during the USB mode, for example, in response to the first state of the mode select signal (410). Thereafter, transceiver 250 operates as a USB PHY device (e.g., in accordance with either USB 2.0 protocols, USB 3.0 protocols, or other USB protocols), and host device 200 and external device 280 may exchange signals using USB controller 230 and transceiver 250 over USB port 260 in a manner consistent with the USB protocols (412).

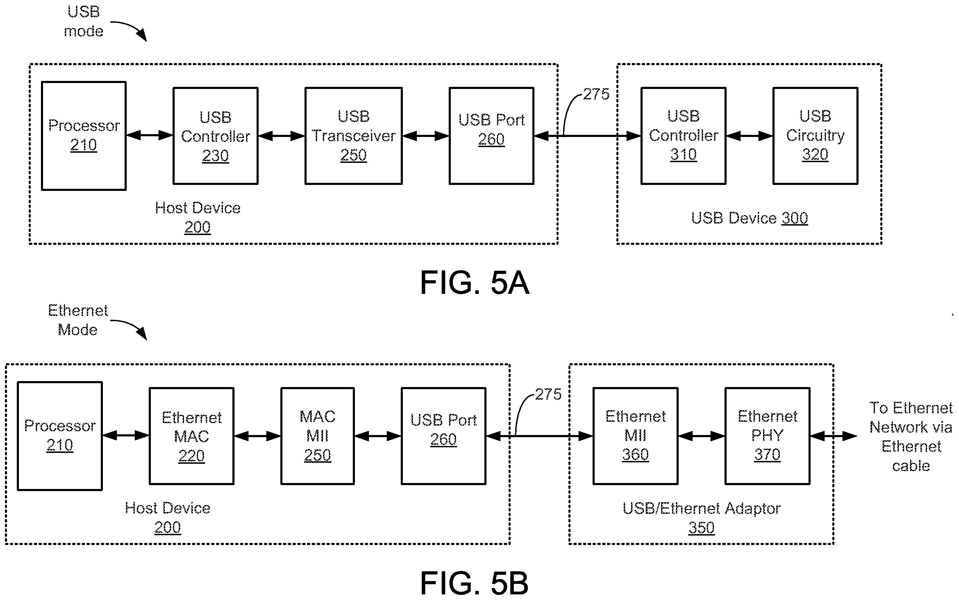

For example, FIG. 5A depicts host device 200 operating in the USB mode when coupled to external device 300 of FIG. 3A. More specifically, when host device 200 operates in the USB mode, its transceiver 250 (which as discussed above may form a portion of a USB 3.0 compliant interface) may modulate signals received from USB controller 230 for transmission to external device 300 via USB port 260, and may de-modulate signals received from external device 300 via USB port 260 for transmission to USB controller 230, for example, as depicted in FIG. 5A. Thus, as shown in FIG. 5A, host device 200 may exchange data with external device 300 according to USB communication protocols.

Referring again to FIG. 4, if detection circuit 270 determines that external device 280 is an Ethernet device, at tested at 404, thenhost device 200 enters an Ethernet mode of operation and detection circuit 270 drives the mode select signal to a second state indicating an Ethernet mode of operation (416). In response to the second state of the mode select signal, select circuit 240 couples transceiver 250 to Ethernet MAC circuit 220 and de-couples transceiver 250 from USB controller 230 (418). For at least some embodiments, USB controller 230 may be disabled during the Ethernet mode, for example, in response to the second state of the mode select signal(420). Thereafter, transceiver 250 operates as anEthernet MAC-side Mil, and host device 200 and external device 280 may exchange signals using Ethernet MAC circuit 220 and transceiver 250 over USB port 260 in a manner consistent with Ethernet communication protocols (422).

For example, FIG. 5B depicts host device 200 operating in the Ethernet mode when coupled to external USB-to-Ethernet adaptor 350 of FIG. 3B. When host device 200 operates in the Ethernet mode, its transceiver 250 (which as discussed above may form a portion of a USB 3.0 compliant interface) operates as a MAC-side Mil to modulate signals received from Ethernet MAC circuit 220 for transmission to external device 350 via USB port 260, and may de-modulate signals received from external device 350 via USB port 260 for transmission to Ethernet MAC circuit 220. Thus, host device 200 may exchange data with external device 350 using communications governed by Ethernet standards (e.g., IEEE 802.3 standards). More specifically, during the Ethernet mode, transceiver 250 operates as a MAC-side Mil and Ethernet Mil 360 operates as a PHY-side MII. Together, the MAC-side Mil implemented by transceiver 250 and the PHY-side Mil 360 facilitate Ethernet communications between Ethernet MAC circuit 220 of host device 200 and Ethernet PHY 370 of external device 350. Thus, in contrast to conventional systems, the Ethernet PHY 370 resides in external device 350, the Ethernet MAC circuit 220 resides in host device 200, and the MAC-side Mil may be implemented using transceivers that form a portion of a USB 3.0 compliant interface.

As a result, some embodiments may allow Ethernet signals to be transmitted through USB port 260 of host device 200 without an Ethernet port or a dedicated Ethernet transceiver provided on host device 200, thereby reducing circuit area and complexity of host device 200. In addition, some embodiments may allow an external USB-to-Ethernet adaptor such as external device 350 to exchange Ethernet signals with host device 200 without external device 350 including its own Ethernet MAC circuit or USB controller, thereby reducing circuit area and complexity, as well as reducing power consumption, of external device 350. This is in contrast to conventional host devices that provide USB communication protocols over their USB ports and then convert USB signals to Ethernet signals on the external device, which as mentioned above requires the external device to include its own USB controller and Ethernet MAC circuitry. In addition, while conventional USB-to-Ethernet adaptors may perform 8B/10B encoding functions, at least some embodiments of host device 200 allow 8B/10B encoding functionsto be performed on host device 200 prior to transmission from transceivers 250, which in turn may further simplify and reduce the size of external device 350.

In the foregoing specification, the present embodiments have been described with reference to specific exemplary embodiments thereof. It will, however, be evident that various modifications and changes may be made thereto without departing from the scope of the disclosure as set forth in the appended claims. The specification and drawings are, accordingly, to be regarded in an illustrative sense rather than a restrictive sense.

## Claims

1. A host device (200) for facilitating either Ethernet communications or universal serial bus, USB communications with an external device (280) over a USB connection, the host device comprising:
a processor (210) for generating data to be transmitted to the external device (280);
an Ethernet media access control, MAC circuit (220) coupled to the processor;
a USB controller (230) coupled to the processor;
a USB port (260) to couple to the external device via the USB connection;
a detection circuit (270) to generate a mode select signal according to a USB mode in response to determining that the external device (280) is a USB device or according to an Ethernet mode in response to determining that the external device (280) is an Ethernet device; and
a transceiver (250) including:
first terminals coupled to the USB port (260); and
second terminals coupled to either the Ethernet MAC circuit (220) or to the USB controller (230) in response to a mode select signal,
wherein during the USB mode the transceiver (250) and the USB port (260) together are to operate as an interface compliant with a USB standard, and wherein during the Ethernet mode the transceiver (250) is to operate as a MAC-side media independent interface, MII, compliant with an Ethernet standard.

2. The host device (200) of claim 1, wherein the transceiver (250) further comprises:
a number of differential transistor pairs to provide full-duplex signaling between the host device (200) and the external device (280) via the USB connection.

3. The host device (200) of claim 1, wherein during a first mode the transceiver (250) is to operate as an interface compliant with a peripheral component interface, PCI standard, and wherein during a second mode the transceiver (250) is to operate as a MAC-side media independent interface compliant with an Ethernet standard.

4. The host device of claim 1, wherein the external device (280) comprises a USB-to-Ethernet adaptor including an Ethernet physical layer, PHY circuit and a PHY-side media independent interface.

5. The host device (200) of claim 4, wherein the MAC-side and the PHY-side media independent interfaces are to facilitate an exchange of Ethernet signals between the Ethernet MAC circuit (220) of the host device (200) and the Ethernet PHY circuit of the USB-to-Ethernet adaptor via the USB connection.

6. The host device (200) of claim 1, wherein:
the transceiver (250) is to operate as a media independent interface to exchange Ethernet signals between the Ethernet MAC circuit (220) and the external device (280) via the USB port (260) if the mode select signal indicates an Ethernet mode; and
the transceiver (250) is to operate as a USB compliant transceiver to exchange USB signals between the USB controller (230) and the external device (280) via the USB port (260) if the mode select signal indicates a USB mode.

7. The host device (200) of claim 1, further comprising:
a select circuit (240) to selectively couple the transceiver to either the Ethernet MAC circuit (220) or to the USB controller (230) in response to the mode select signal.

8. A system (20) for facilitating either Ethernet communications or universal serial bus, USB communications over a USB cable, the system comprising:
a host device (200) according to claim 1; and
an external device (280), comprising:
an Ethernet physical layer, PHY circuit; and
a PHY-side media independent interface, MII, to the Ethernet PHY circuit.

9. The system (20) of claim 8, wherein the transceiver (250) forms a portion of a USB compliant interface and is to operate as the MAC-side media independent interface, MII to facilitate communications between the Ethernet MAC circuit (220) and the Ethernet PHY circuit via the USB cable.

10. The system (20) of claim 8, wherein the external device (280) comprises a USB-to-Ethernet adaptor, and the Ethernet PHY circuit is to couple with an Ethernet network via an Ethernet cable.

11. The system (20) of claim 10, wherein the USB-to-Ethernet adaptor does not include a USB controller or any Ethernet MAC circuit.

12. A method (400) for facilitating either Ethernet communications or universal serial bus, USB communications between a host device (200) and an external device (280) over a USB connection, the method comprising:
determining (404) by a detection circuit (270) provided in the host device (200) whether the external device (280) is a USB device or an Ethernet device;
if the external device is determined to be an Ethernet device, operating a transceiver (250) provided in the host device (200) as a media independent interface, MII, to facilitate Ethernet-compliant signals between an Ethernet media access control, MAC circuit (220) on the host device (200) and an Ethernet physical layer, PHY device (370) on the external device (280); and
if the external device (280) is determined to be a USB device, operating the transceiver (250) provided in the host device as a portion of a USB compliant interface to exchange USB-compliant signals with the external device.

13. The method (400) of claim 12, further comprising:
driving (406) a mode select signal to a first state if the USB device is detected; and
driving (416) the mode select signal to a second state if the Ethernet device is detected.

14. The method (400) of claim 13, further comprising:
if the mode select signal is in the first state, coupling (408) the transceiver (250) to a USB controller (230) in the host device and decoupling the transceiver from the Ethernet MAC circuit; and
if the mode select signal is in the second state, coupling (418) the transceiver (250) to the Ethernet MAC circuit and decoupling the transceiver from the USB controller.

## Patentansprüche

1. Host-Gerät (200) zum Unterstützen von entweder Ethernet-Kommunikation oder Universal Serial Bus, USB-Kommunikation mit einem externen Gerät (280) über eine USB-Verbindung, wobei das Host-Gerät umfasst:
einen Prozessor (210) zum Erzeugen von Daten, die an das externe Gerät (280) zu übermitteln sind;
einen Ethernet Media Access Control, MAC Schaltkreis (220), der an den Prozessor gekoppelt ist;
einen USB-Controller (230), der an den Prozessor gekoppelt ist;
einen USB-Port (260), um das externe Gerät über die USB-Verbindung zu koppeln;
einen Detektions-Schaltkreis (270), um ein Modus-Auswahlsignal zu erzeugen entsprechend einem USB-Modus in Antwort auf eine Bestimmung, dass das externe Gerät (280) ein USB-Gerät ist, oder entsprechend einem Ethernet-Modus in Antwort auf eine Bestimmung, dass das externe Gerät (280) ein Ethernet-Gerät ist; und
einen Transceiver (250), enthaltend:
erste Anschlüsse, die an den USB-Port (260) gekoppelt sind; und
zweite Anschlüsse, die entweder an den Ethernet MAC-Schaltkreis (220) oder an den USB-Controller (230) gekoppelt sind in Antwort auf ein Modus-Auswahlsignal,
wobei während dem USB-Modus der Transceiver (250) und der USB-Port (260) zusammen wie eine Schnittstelle im Einklang mit einem USB-Standard betreibbar sind, und wobei während dem Ethernet-Modus der Transceiver (250) als MAC-seitige Media Independent Interface, MII Schnittstelle betreibbar ist, in Einklang mit einem Ethernet-Standard.

2. Host-Gerät (200) gemäß Anspruch 1, wobei der Transceiver (250) weiterhin umfasst:
eine Anzahl differenzieller Transistorpaare, um Vollduplex-Signalisierung zwischen dem Host-Gerät (200) und dem externen Gerät (280) über die USB-Verbindung zu ermöglichen.

3. Host-Gerät (200) gemäß Anspruch 1, wobei während eines ersten Modus der Transceiver (250) wie eine Schnittstelle in Einklang mit einem Peripheral Component Interface, PCI-Standard betreibbar ist, und wobei während eines zweiten Modus der Transceiver (250) wie ein MAC-seitiges Media Independent Interface in Einklang mit einem Ethernet-Standard betreibbar ist.

4. Host-Gerät gemäß Anspruch 1, wobei das externe Gerät (280) einen USB-zu-Ethernet-Adapter umfasst, der einen Ethernet Physical Layer, PHY-Schaltkreis enthält und ein PHY-seitiges Media Independent Interface.

5. Host-Gerät (200) gemäß Anspruch 4, wobei die MAC-seitige und das PHYseitige Media Independent Interface über die USB-Verbindung zum Unterstützen eines Austauschs von Ethernet-Signalen vorgesehen sind zwischen dem Ethernet-MAC-Schaltkreis (220) des Host-Geräts (200) und dem Ethernet-PHY-Schaltkreis des USB-zu-Ethernet-Adapters.

6. Host-Gerät (200) gemäß Anspruch 1, wobei:
der Transceiver (250) als Media Independent Interface betreibbar ist, um Ethernet-Signale zwischen dem Ethernet MAC-Schaltkreis (220) und dem externen Gerät (280) über den USB-Port (260) auszutauschen, wenn das Modus-Auswahlsignal einen Ethernet-Modus indiziert; und
der Transceiver (250) als USB-compliant Transceiver betreibbar ist, um USB-Signale zwischen dem USB-Controller (230) und dem externen Gerät (280) über den USB-Port (260) auszutauschen, wenn das Modus-Auswahlsignal einen USB-Modus indiziert.

7. Host-Gerät (200) gemäß Anspruch 1, weiterhin umfassend:
einen Auswahlschaltkreis (240) um den Transceiver selektiv entweder an den Ethernet MAC-Schaltkreis (220) oder an den USB-Controller (230) in Antwort auf das Modus-Auswahlsignal zu koppeln.

8. System (20) zum Unterstützen von entweder Ethernet-Kommunikation oder Universal Serial Bus, USB-Kommunikation über ein USB-Kabel, wobei das System umfasst:
ein Host-Gerät (200) gemäß Anspruch 1; und
ein externes Gerät (280), umfassend:
einen Ethernet Physical Layer, PHY-Schaltkreis; und
ein PHY-seitiges Media Independent Interface, MII zu dem Ethernet-PHY-Schaltkreis.

9. System (20) gemäß Anspruch 8, wobei der Transceiver (250) einen Teil einer USB-compliant Schnittstelle darstellt und als MAC-seitiges Media Independent Interface, MII betreibbar ist, um Kommunikation zwischen dem Ethernet MAC-Schaltkreis (220) und dem Ethernet PHY Schaltkreis über das USB-Kabel zu unterstützen.

10. System (20) gemäß Anspruch 8, wobei das externe Gerät (280) einen USB-zu-Ethernet-Adapter umfasst, und der Ethernet PHY-Schaltkreis mit einem Ethernet-Netzwerk über ein Ethernet-Kabel koppelbar ist.

11. System (20) gemäß Anspruch 10, wobei der USB-zu-Ethernet-Adapter keinen USB-Controller oder Ethernet MAC-Schaltkreis enthält.

12. Verfahren (400) zum Unterstützen von entweder Ethernet-Kommunikation oder Universal Serial Bus, USB-Kommunikation zwischen einem Host-Gerät (200) und einem externen Gerät (280) über eine USB-Verbindung, wobei das Verfahren umfasst:
Bestimmen (404), durch einen in dem Host-Gerät bereitgestellten Detektions-Schaltkreis (270), ob das externe Gerät (280) ein USB-Gerät oder ein Ethernet-Gerät ist;
wenn das externe Gerät als Ethernet-Gerät bestimmt ist, Betreiben eines in dem Host-Gerät (200) bereitgestellten Transceivers (250) als Media Independent Interface, MII, um Ethernet-compliant Signale zwischen einem Ethernet Media Access Control, MAC-Schaltkreis (220) in dem Host-Gerät (200) und einem Ethernet Physical Layer, PHY-Gerät (370) in dem externen Gerät (280) zu unterstützen; und
wenn das externe Gerät (280) als USB-Gerät bestimmt ist, Betreiben des in dem Host-Gerät (200) bereitgestellten Transceivers (250) als Teil einer USB-compliant Schnittstelle, um USB-compliant Signale mit der externen Schnittstelle auszutauschen.

13. Verfahren (400) gemäß Anspruch 12, weiterhin umfassend:
Treiben (406) des Modus-Auswahlsignals in einen ersten Zustand, wenn das USB-Gerät detektiert wird; und
Treiben (416) des Modus-Auswahlsignals in einen zweiten Zustand, wenn das Ethernet-Gerät detektiert wird.

14. Verfahren (400) gemäß Anspruch 13, weiterhin umfassend:
wenn das Modus-Auswahlsignal in dem ersten Zustand ist, koppeln (408) des Transceivers (250) an einen USB-Controller (230) in dem Host-Gerät, und entkoppeln des Transceivers von dem Ethernet MAC-Schaltkreis; und
wenn das Modus-Auswahlsignal in dem zweiten Zustand ist, koppeln (418) des Transceivers (250) an den Ethernet MAC-Schaltkreis und entkoppeln des Transceivers von dem USB-Controller.

## Revendications

1. Dispositif hôte (200) pour faciliter soit des communications Ethernet soit des communications de bus série universel, USB, avec un dispositif externe (280) sur une connexion USB, le dispositif hôte comprenant :
un processeur (210) pour générer des données à transmettre au dispositif externe (280) ;
un circuit de commande d'accès au support, MAC, Ethernet (220) couplé au processeur ;
un dispositif de commande USB (230) couplé au processeur ;
un port USB (260) pour le couplage au dispositif externe par le biais de la connexion USB;
un circuit de détection (270) pour générer un signal de sélection de mode selon un mode USB en réponse à la détermination du fait que le dispositif externe (280) est un dispositif USB ou selon un mode Ethernet en réponse à la détermination du fait que le dispositif externe (280) est un dispositif Ethernet ; et
un émetteur-récepteur (250) comprenant :
des premières bornes connectées au port USB (260) ; et
des deuxièmes bornes couplées soit au circuit MAC Ethernet (220) soit au dispositif de commande USB (230) en réponse à un signal de sélection de mode,
dans lequel, durant le mode USB, l'émetteur-récepteur (250) et le port USB (260) sont adaptés conjointement pour fonctionner comme une interface conforme à un standard USB et dans lequel, durant le mode Ethernet, l'émetteur-récepteur (250) est adapté pour fonctionner comme une interface indépendante du support, MII, côté MAC conforme à un standard Ethernet.

2. Dispositif hôte (200) selon la revendication 1, dans lequel l'émetteur-récepteur (250) comprend en outre :
un nombre de paires de transistors différentiels pour fournir une signalisation en duplex intégral entre le dispositif hôte (200) et le dispositif externe (280) par le biais de la connexion USB.

3. Dispositif hôte (200) selon la revendication 1, dans lequel, durant un premier mode, l'émetteur-récepteur (250) est adapté pour fonctionner comme une interface conforme à un standard d'interface de composant périphérique, PCI, et, dans lequel, durant un deuxième mode, l'émetteur-récepteur (250) est adapté pour fonctionner comme une interface indépendante du support côté MAC conforme à un standard Ethernet.

4. Dispositif hôte selon la revendication 1, dans lequel le dispositif externe (280) comprend un adaptateur USB-Ethernet comprenant un circuit de couche physique Ethernet, PHY, et une interface indépendante du support côté PHY.

5. Dispositif hôte (200) selon la revendication 4, dans lequel les interfaces indépendantes du support côté MAC et côté PHY sont adaptées pour faciliter un échange de signaux Ethernet entre le circuit MAC Ethernet (220) du dispositif hôte (200) et le circuit PHY Ethernet de l'adaptateur USB-Ethernet par le biais de la connexion USB.

6. Dispositif hôte (200) selon la revendication 1, dans lequel :
l'émetteur-récepteur (250) est adapté pour fonctionner comme une interface indépendante du support pour échanger des signaux Ethernet entre le circuit MAC Ethernet (220) et le dispositif externe (280) par le biais du port USB (260) si le signal de sélection de mode indique un mode Ethernet ; et
l'émetteur-récepteur (250) est adapté pour fonctionner comme un émetteur-récepteur compatible USB pour échanger des signaux USB entre le dispositif de commande USB (230) et le dispositif externe (280) par le biais du port USB (260) si le signal de sélection de mode indique un mode USB.

7. Dispositif hôte (200) selon la revendication 1, comprenant en outre :
un circuit de sélection (240) pour coupler sélectivement l'émetteur-récepteur soit au circuit MAC Ethernet (220) soit au dispositif de commande USB (230) en réponse au signal de sélection de mode.

8. Système (20) pour faciliter soit des communications Ethernet soit des communications de bus série universel, USB, sur un câble USB, le système comprenant :
un dispositif hôte (200) selon la revendication 1 ; et
un dispositif externe (280) comprenant :
un circuit de couche physique Ethernet, PHY ; et
une interface indépendante du support, MII, côté PHY, au circuit PHY Ethernet.

9. Système (20) selon la revendication 8, dans lequel l'émetteur-récepteur (250) forme une portion d'une interface compatible USB et est adapté pour fonctionner comme l'interface indépendante du support, MII, côté MAC, pour faciliter des communications entre le circuit MAC Ethernet (220) et le circuit PHY Ethernet par le biais du câble USB.

10. Système (20) selon la revendication 8, dans lequel le dispositif externe (280) comprend un adaptateur USB-Ethernet et le circuit PHY Ethernet est adapté pour le couplage à un réseau Ethernet par le biais d'un câble Ethernet.

11. Système (20) selon la revendication 10, dans lequel l'adaptateur USB-Ethernet ne comprend pas un dispositif de commande USB ni un quelconque circuit MAC Ethernet.

12. Procédé (400) pour faciliter soit des communications Ethernet soit des communications de bus série universel, USB, entre un dispositif hôte (200) et un dispositif externe (280) sur une connexion USB, le procédé comprenant :
le fait de déterminer (404), par un circuit de détection (270) disposé dans le dispositif hôte (200), si le dispositif externe (280) est un dispositif USB ou un dispositif Ethernet ;
si le dispositif externe est déterminé comme étant un dispositif Ethernet, le fonctionnement d'un émetteur-récepteur (250) disposé dans le dispositif hôte (200) comme une interface indépendante du support, MII, pour faciliter des signaux compatibles Ethernet entre un circuit de commande d'accès au support, MAC, Ethernet (220) sur le dispositif hôte (200) et un dispositif de couche physique, PHY, Ethernet (370) sur le dispositif externe (280) ; et
si le dispositif externe (280) est déterminé comme étant un dispositif USB, le fonctionnement de l'émetteur-récepteur (250) disposé dans le dispositif hôte comme une portion d'une interface compatible USB pour échanger des signaux compatibles USB avec le dispositif externe.

13. Procédé (400) selon la revendication 12, comprenant en outre :
l'actionnement (406) d'un signal de sélection de mode à un premier état si le dispositif USB est détecté ; et
l'actionnement (416) du signal de sélection de mode à un deuxième état si le dispositif Ethernet est détecté.

14. Procédé (400) selon la revendication 13, comprenant en outre :
si le signal de sélection de mode est dans le premier état, le couplage (408) de l'émetteur-récepteur (250) à un dispositif de commande USB (230) dans le dispositif hôte et le découplage de l'émetteur-récepteur par rapport au circuit MAC Ethernet ; et si le signal de sélection de mode est dans le deuxième état, le couplage (418) de l'émetteur-récepteur (250) au circuit MAC Ethernet et le découplage de l'émetteur-récepteur par rapport au dispositif de commande USB.
